(19) 

Europäisches
Patentamt
European
Patent Office
Office européen
des brevets

(11) **EP 3 332 650 A1**

(12) **EUROPEAN PATENT APPLICATION**
published in accordance with Art. 153(4) EPC

(43) Date of publication:
**13.06.2018 Bulletin 2018/24**

(51) Int Cl.:
***A23K 50/42*** *(2016.01)*       ***A23K 10/20*** *(2016.01)*
***A23K 10/30*** *(2016.01)*

(21) Application number: **16832560.3**

(22) Date of filing: **18.04.2016**

(86) International application number:
**PCT/JP2016/062285**

(87) International publication number:
**WO 2017/022280 (09.02.2017 Gazette 2017/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.08.2015   JP 2015153664**

(71) Applicant: **Unicharm Corporation
Ehime 799-0111 (JP)**

(72) Inventors:
  • **YAMAMOTO Junichi
  Itami-shi
  Hyogo 664-0831 (JP)**

  • **IWATA Saho
  Itami-shi
  Hyogo 664-0831 (JP)**
  • **IKEDA Go
  Itami-shi
  Hyogo 664-0831 (JP)**
  • **YOSHIGA Fumisato
  Itami-shi
  Hyogo 664-0831 (JP)**

(74) Representative: **Wendels, Stefan
  Staeger & Sperling
  Partnerschaftsgesellschaft mbB
  Sonnenstrasse 19
  80331 München (DE)**

(54)     **PET FOOD AND METHOD FOR PREPARING SAME**

(57)     Provided is pet food containing puffed granules; small pieces of dried vegetables; and small pieces of dried meat, in which the moisture content thereof is 10% by mass or less.

**EP 3 332 650 A1**

**Description**

Technical Field

The present invention relates to pet food and a method for preparing the same.
Priority is claimed on Japanese Patent Application No. 2015-153664, filed on August 3, 2015, the content of which is incorporated herein by reference.

Background Art

In recent years, the desire for healthful pet food has been increasing. Accordingly, in the design of pet food, it is required that pet food has an impression (healthy impression) that the pet food is nutritionally well-balanced and good for pet's health at the time of viewing the pet food as well as pet food palatability for pets is favorable.
PTL 1 describes a method of avoiding nutritional imbalance and deficiency and excess of nutrition by weighing respective necessary amounts of small pieces obtained by forming meat using a binder such as gelatin; dried puffed granules; small pieces of dried vegetables; minerals; vitamins; and fats and oils which are contained in an additional nutrition solution, mixing these, and feeding the mixture.
PTL 2 describes a method of adding vegetables on which a specific dry processing treatment has been performed to commercially available pet food and feeding the pet food.

Citation List

Patent Literature

[PTL 1] Japanese Unexamined Patent Application, First Publication No. 2008-5803
[PTL2] Published Japanese Translation No. 2005-536207 of the PCT international Publication

Summary of Invention

Technical Problem

The method of PTL 1 is time-consuming since a step of weighing and mixing granules or small pieces before feeding is required. The method of PTL 2 is also time-consuming since a step of adding dried vegetables to the pet food and mixing these before feeding is required.
An object of the present invention is to provide pet food which can be easily fed, has favorable palatability for pets, and has an excellent healthy impression; and a method for preparing the pet food.

Solution to Problem

The present invention includes the following aspects.

[1] Pet food containing: puffed granules; small pieces of dried vegetables; and small pieces of dried meat, in which the moisture content of the pet food is 10% by mass or less.
[2] The pet food according to [1], in which the moisture content of each of the puffed granules, the small pieces of dried vegetables, and the small pieces of dried meat is 10% by mass or less.
[3] The pet food according to [1] or [2], in which the hardness of the small pieces of dried meat is in a range of 3.9 to 29.4 N.
[4] The pet food according to any one of [1] to [3], in which the small pieces of dried meat are freeze-dried.
[5] The pet food according to any one of [1] to [4], in which the proportion of small pieces having a mesh opening value as measured according to a sieving method of 7 mm or greater in the small pieces of dried meat is 20% by mass or less.
[6] The pet food according to any one of [1] to [5], in which the small pieces of dried meat are impregnated with fats and oils and saccharides.
[7] The pet food according to any one of [1] to [6], in which the small pieces of dried vegetables have been subjected to a treatment of preservation in sugar.
[8] The pet food according to any one of [1] to [7], in which the small pieces of dried vegetables are coated with a coating composition containing a palatability improver.

[9] The pet food according to any one of [1] to [8], in which the small pieces of dried vegetables contain porous small pieces of dried vegetables.

[10] The pet food according to any one of [1] to [9], in which the puffed granules contain two or more kinds of puffed granules with nutrient compositions different from one another, and all puffed granules do not contain a colorant.

[11] The pet food according to any one of [1] to [10], in which the puffed granules contain staple puffed granules satisfying the following nutrient composition.

crude protein content: 18% to 34% by mass, crude fat content: 5% to 22% by mass, calcium content: 0.6% to 2.5% by mass, and phosphorus content: 0.5% to 1.6% by mass

[12] A method for preparing pet food, including: mixing puffed granules, small pieces of dried vegetables, and small pieces of dried meat such that the moisture content of the mixture is 10% by mass or less.

[13] The method for preparing pet food according to [12], in which the moisture content of each of the puffed granules, the small pieces of dried vegetables, and the small pieces of dried meat before being mixed is 10% by mass or less.

[14] The method for preparing pet food according to [12] or [13], in which the puffed granules and the small pieces of dried vegetables which are coated with a coating composition containing a palatability improver are mixed with the small pieces of dried meat which are not coated with the coating composition.

Advantageous Effects of Invention

The pet food of the present invention can be easily fed, has favorable palatability for pets, and has an excellent healthy impression.

According to the method for preparing pet food of the present invention, it is possible to obtain pet food which can be easily fed, has favorable palatability for pets, and has an excellent healthy impression.

Description of Embodiments

[Method of measuring moisture content]

In the present specification, the moisture content is a value acquired by a normal pressure heating and drying method.

Specifically, an object to be measured is pulverized using a pulverizer so as to pass through a sieve having an opening diameter of 1 mm and then used as a sample. The mass (W1 gram) of an aluminum weighing can is measured in advance as a constant weight value. The sample is put into the aluminum weighing can and the mass (W2 gram) is weighed. Next, the sample is dried under conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following equation.

$$\text{Moisture content (unit: \% by mass)} = (W2 - W3) \div (W2 - W1) \times 100$$

The "moisture content of pet food" which is a mixture of granules and small pieces is a value obtained by measuring the mixture as an object to be measured. The "moisture content of granules (or small pieces)" is a value obtained by measuring only one kind of granules (or small pieces) as an object to be measured.

Both moisture contents are set to values measured immediately after pet food (hereinafter, also referred to as a pet food product) produced by accommodating granules and small pieces constituting the pet food in a packaging container and sealing the packaging container is opened within 30 days from the date of manufacture or set to values measured under conditions similar to the conditions described above.

[Method of measuring hardness]

In the present specification, the hardness (breaking hardness) of small pieces of dried meat is a value obtained by the following measuring method.

The breaking stress at the time when small pieces of dried meat are compressed at a constant compression rate is measured under the following conditions using a compression tester (TEXTUROMETER, model No.: GTX-2, manufactured by ZENKEN CORPORATION).

Plunger: cylindrical plunger having diameter of 3 mm

Platform: flat dish
Compression rate: LOW
Output: 1 V
Lowest point of plunger: 2 mm (gap between flat dish and plunger)
Measurement temperature: 25°C

Specifically, one small piece of dried meat to be measured is placed on the flat dish and the stress is measured while a plunger is vertically pressed from the top of the small piece at a constant rate. The peak value (maximum value) of the stress is read as the value of the breaking stress. The measurement is repeated with respect to ten small pieces and the average value of the obtained values is acquired.

The numerical value unit of the breaking hardness is converted into newton (N) by multiplying the numerical value of the breaking stress (unit: kgw) measured using the above-described compression tester by 9.8.

Further, the hardness of the small piece of dried meat is set to a value measured immediately after the pet food product is opened within 30 days from the date of manufacture or a value measured under conditions similar to the conditions described above.

[Method of measuring mesh opening value according to sieving method]

In the present specification, the mesh opening value is a value based on the definition of "mesh opening" described in prescription for the size of mesh of a sieve net in a test sieve (metal net sieve: JIS Z 8801-1).

For example, small pieces having a mesh opening value of 7 mm or greater indicate small pieces with a size which remain on a sieve net without passing therethrough when a group of small pieces is gently placed on a sieve having a mesh size (mesh opening) of a test sieve net of 7 mm and the horizontal plane is allowed to vibrate in one direction under conditions of an amplitude size of approximately 200 mm for 1 minute and 100 times of reciprocation so that the small pieces are sieved.

[Method of measuring average long diameter and average short diameter]

In the present specification, the average long diameter of granules and small pieces is obtained by optionally taking 20 granules or small pieces out, measuring the longest diameters thereof using Vernier calipers, and setting the average value of these obtained values as the average long diameter. The shortest diameters in directions perpendicular to the directions of the longest diameters, and the average value of these obtained values is set as the average short diameter.

[Method of measuring main nutrient components]

The contents of the following nutrient components described below are all values in terms of dry matter.

(Crude protein content)

In the present specification, the crude protein content (% by mass) is calculated by multiplying the nitrogen content (% by mass) measured by a Kjeldahl method described in Feed Analysis Standard Comment (second edition) published by Japan Scientific Feeds Association by 6.25 as a protein coefficient.

According to the present method, the total content of amino acids and aminos other than pure protein is measured as the crude protein content.

(Crude fat content)

In the present specification, the crude fat content (unit: % by mass) is a value measured by an acid-decomposed diethyl ether extrusion method described in Feed Analysis Standard Comment (second edition) published by Japan Scientific Feeds Association.

(Calcium content)

In the present specification, the calcium content (unit: % by mass) is a value measured by ICP emission spectrometry described in Feed Analysis Standard Comment (second edition) published by Japan Scientific Feeds Association.

(Phosphorus content)

In the present specification, the phosphorus content (unit: % by mass) is a value measured by ICP emission spectrometry described in Feed Analysis Standard Comment (second edition) published by Japan Scientific Feeds Association.

<Puffed granules>

The pet food of the present invention contains puffed granules. The puffed granules are granules produced by performing a puffing step. The "puffing step" indicates a step of generating gas inside of an ingredient mixture using a technique of carrying out heating, fermentation, a chemical reaction, or pressure reduction. During the puffing step, the volume of the ingredient mixture is increased due to the generation of gas to have a porous property. Puffed granules are obtained by forming the ingredient mixture in a granular shape before, after, or simultaneously with the puffing step. For example, puffed granules can be produced according to a method of extruding and granulating the ingredient mixture to be puffed using an extruder.

The puffed granules are heated and dried so as to obtain a predetermined moisture content as necessary. It is preferable that the surface of each puffed granules is coated with a coating composition. The coating composition will be described below.

The ingredients of puffed granules are not limited as long as the ingredients can be used as feed. Examples of the ingredients include cereals (such as corn, wheat, rice, barley, oat, and rye), beans (such as whole soybeans), starch (wheat starch, corn starch, rice starch, potato starch, tapioca starch, and sweet potato starch), vegetable protein sources (such as corn gluten meals and processed soybean products (such as defatted soybeans and protein other than soybeans), raw meat (such as chicken meat, beef, pork, venison, and fish), animal protein sources other than raw meat (such as meals and eggs (egg powder)), vegetables, additives (such as vitamins, minerals, an amino acid, flavoring ingredients, fibers, colorants, and palatability improvers), and external additives (such as fats and oils and palatability improvers).

The meals as the animal protein sources indicate powder obtained by compressing meat or seafood and finely grinding the compressed meat or seafood. Examples of the meals include chicken meal, pork meal, beef meal, fish mill, and mixed mill of these.

Examples of the palatability improvers include extract powder of animal ingredients such as livestock meat and seafood; and extract powder of vegetable ingredients.

The external additives indicate components to be added (externally added) after the ingredient mixture is formed in a granular shape. It is preferable that the external additives such as fats and oils and palatability improvers are added as the coating composition.

The ingredient composition of puffed granules can be set depending on the intended purpose thereof. The pet food of the present invention may contain two or more kinds of puffed granules having nutrient compositions different from one another. In a case where the pet food contains two or more kinds of puffed granules, the degree of freedom for designing nutrient components in the whole puffed granules is improved. For example, a design for nutrient components in which a healthy impression is easily obtained or a design for components in which the palatability is easily obtained can be achieved.

From the viewpoint of the healthy impression, it is preferable that the puffed granules do not contain a colorant. In a case where the pet food contains two or more kinds of puffed granules, it is preferable that all puffed granules do not contain a colorant and the color tones of the puffed granules are different from one another due to a difference in ingredient composition. It is possible to obtain colorful appearance without using a colorant by the pet food containing two or more kinds of puffed granules with color tones different from one another.

Examples of the puffed granules having nutrient compositions different from one another include staple puffed granules, meat granules, and wheat granules described below.

[Staple puffed granules]

It is preferable that the puffed granules contain staple puffed granules satisfying the following nutrient composition (in terms of dry matter). The following nutrient composition shows the contents of main nutrient components, and the puffed granules optionally contain nutrient components other than these main nutrient components.

Crude protein content: 18% to 34% by mass, crude fat content: 5% to 22% by mass, calcium content: 0.6% to 2.5% by mass, and phosphorus content: 0.5% to 1.6% by mass

The staple puffed granules satisfying the above-described nutrient composition are nutritionally well-balanced. In a case where the pet food contains such staple puffed granules, the nutritional balance is excellent and pet food having an excellent healthy impression is obtained.

The content of the staple puffed granules is preferably in a range of 40% to 95% by mass and more preferably in a range of 50% to 90% by mass with respect to the total content of the pet food. In a case where the content of the staple puffed granules is in the above-described range, pet food which is nutritionally well-balanced is likely to be obtained.

In the ingredient composition (which does not include external additives) of the staple puffed granule, it is preferable that the total content of cereals, beans, and starch is in a range of 50% to 90% by mass, the content of raw meat is 0% or greater and less than 10% by mass, the total content of animal protein sources is in a range of 10% to 49.9% by mass, and the content of other components is in a range of 0.1% to 10% by mass.

[Meat granules and wheat granules]

Examples of the puffed granules other than the staple puffed granules (which do not satisfy the above-described nutrient composition) include meat granules containing a larger amount of raw meat than the amount of staple puffed granules; and wheat granules containing wheats as the main components. From the viewpoint of easily obtaining colorful appearance, it is preferable that the color tone of wheat granules is greatly different from the color tone of staple puffed granules or the color tone of meat granules.

In the ingredient composition (which does not include external additives) of meat granules, it is preferable that the total content of raw meat is in a range of 10% to 30% by mass, the total content of cereals, beans, and starch is in a range of 30% to 89.9% by mass, the total content of animal protein sources is in a range of 0% to 20% by mass, and the content of other components is in a range of 0.1% to 10% by mass.

It is preferable that the ingredient composition (which do not include external additives) of wheat granules is a composition which does not include raw meat and in which the total content of cereals, beans, and starch is in a range of 80% to 99% by mass, the content of other components is in a range of 0% to 20% by mass, and 50% to 100% by mass of the cereals, the beans, and the starch are wheat flours (only wheat flour or wheat flour and bread crumbs).

[Coating composition]

It is preferable that the coating composition contains fats and oils and/or palatability improvers as the external additives. The fats and oils may be vegetable fats and oils or animal fats and oils (for example, chicken oil, lard, beef tallow (fat), and milk fats and oils). The fats and oils may be used alone or in combination of two or more kinds thereof.

Examples of the palatability improvers include animal ingredient enzyme decomposition products, vegetable ingredient enzyme decomposition products, and yeast extracts. The palatability improvers may be used alone or in combination of two or more kinds thereof.

The amount of the coating composition to be applied to puffed granules (granules to be coated) is preferably in a range of 1% to 15% by mass and more preferably in a range of 2% to 10% by mass with respect to the amount of the puffed granules after the application.

[Moisture content of puffed granules]

The moisture content of puffed granules is preferably 10% by mass or less, more preferably in a range of 5% to 9.5% by mass, and still more preferably in a range of 6% to 9% by mass. The granules having a moisture content of 10% by mass or less are granules for so-called "dried food".

In a case where the puffed granules are coated, the moisture content of the puffed granules indicates the moisture content after the puffed granules are coated.

In a case where the pet food contains two or more kinds of puffed granules having nutrient compositions different from one another, it is preferable that the moisture contents of puffed granules are respectively in the above-described range.

[Shape of puffed granules]

The shape of puffed granules is not particularly limited as long as the shape is suitable for a pet to eat the granules. Examples of the shape thereof include various shapes such as a granular shape (pellet-like) and a rod shape (stick-like).

In the size of the puffed granules, the average long diameter thereof is preferably in a range of 6.0 to 12.0 mm, more preferably in a range of 7.0 to 11.0 mm, and still more preferably in a range of 7.5 to 10.5 mm. The average short diameter thereof is preferably in a range of 6.0 to 12.0 mm, more preferably in a range of 7.0 to 11.0 mm, and still more preferably in a range of 7.5 to 10.5 mm.

In a case where the pet food contains two or more puffed granules having nutrient compositions different from one another, the shapes or the sizes thereof may be different from one another. By changing the shape and/or the size thereof in addition to the difference in nutrient composition, it is possible to clarify a difference in texture or a difference in appearance. By increasing the difference in texture of puffed granules, it is possible to prevent a pet from being sated with the pet food and improve the palatability. Further, by increasing the difference in appearance, it is possible to obtain colorful appearance.

<Small pieces of dried vegetables>

Small pieces of dried vegetables are obtained by cutting ingredient vegetables, performing a dry pre-treatment on the cut ingredient vegetables as necessary, and drying the resulting vegetables.

The ingredient vegetables are not particularly limited as long as the vegetables are suitable for a pet to eat, and examples thereof include cabbage, carrots, pumpkins, green beans, tomatoes, broccoli, sweet potatoes, and asparagus. From the viewpoint of easily obtaining an excellent healthy impression, it is preferable that the pet food contains two or more kinds of small pieces of dried vegetables with ingredient vegetables different from one another. From the viewpoint that it is easily understood that the pet food contains small pieces of dried vegetables based on the appearance, it is preferable to use small pieces of dried vegetables with vivid color tones such as cabbage, carrots, pumpkins, green beans, tomatoes, broccoli, and asparagus

Small pieces of dried vegetables which are heated and dried after being preserved in sugar as a dry pre-treatment are preferable as the small pieces of dried vegetables. Examples of saccharides include glucose, lactose, trehalose, and oligosaccharides. By performing the treatment of preserving the small pieces of dried vegetables in sugar, the moisture activity of the small pieces of dried vegetable is decreased so that the preserving properties can be improved. Further, an antioxidant effect for the small pieces of dried vegetables and an effect of preventing discoloration and deformation can be obtained.

It is particularly preferable to use porous small pieces of dried vegetables obtained by treating some or all of small pieces of dried vegetables to be porous after drying. By treating the small pieces of dried vegetables to be porous, the digestibility after feeding a pet is improved. In a case where the digestibility is improved, undigested small pieces of dried vegetables are unlikely to be contained in feces of the pet so that a healthy impression of pet food is further improved.

The porous small pieces of dried vegetables can be produced according to a method of impregnating ingredient vegetables with an expanding agent and saccharides and heating, foaming, and drying the resulting vegetables. An expanding agent that generates gas when heated may be used as the expanding agent. For example, a composition prepared by adding a single component expanding agent such as sodium hydrogen carbonate (sodium bicarbonate) or ammonium hydrogen carbonate or an auxiliary agent, for example, an acid or a salt such as fumaric acid or tartaric acid; phosphate; or burnt alum in addition to the single component expanding agent is preferable. As such a composition, commercially available baking powder can be used.

Specifically, 0.05% to 15.0% by mass of an expanding agent (more preferably in a range of 0.3% to 3.0% by mass) and 2.0% to 40% by mass of saccharides; and 0.005% to 1.0% by mass of an antioxidant (for example, vitamin E) and/or 0.01% to 5.0% by mass of an aggregation inhibitor (for example, edible fats and oils) as necessary are added to and mixed with the ingredient vegetables on which the pre-treatment has been performed as necessary, and then the mixture is stirred. Alternatively, the ingredient vegetables on which the pre-treatment has been performed may be immersed in an aqueous solution in which these components are dissolved. After the ingredient vegetables are allowed to stand to be aged as they are or under a temperature condition of -25°C to 60°C for 10 minutes to 48 hours, the aged ingredient vegetables are heated and dried in a temperature range of 40°C to 120°C for 0.5 to 15 hours. By heating the ingredient vegetables, the expanding agent is foamed, the generated gas enters inside the ingredient vegetables to form bubbles, and thus the vegetables become porous. In this manner, porous small pieces of dried vegetables are obtained.

Alternatively, porous small pieces of dried vegetables can also be obtained according to a method of freeze-drying the ingredient vegetables on which the pre-treatment has been performed as necessary.

It is preferable that small pieces of dried vegetables are coated with the coating composition after being dried.

The definition and the preferable aspect of the coating composition are the same as those of the coating composition of puffed granules.

The amount of the coating composition to be applied to the small pieces of dried vegetables (object to be coated) is preferably in a range of 1% to 15% by mass and more preferably in a range of 2% to 10% by mass with respect to the amount of the small pieces of dried vegetables after the application.

The moisture content of the small pieces of dried vegetables is preferably 10% by mass or less, more preferably in a range of 5% to 9.5% by mass, and still more preferably in a range of 6% to 9% by mass. In a case where the small pieces of dried vegetables are coated, the moisture content of the small pieces of dried vegetables indicates the moisture content after the small pieces of dried vegetables are coated.

In the size of the small pieces of dried vegetable, the content of small pieces having a mesh opening value of 7 mm or greater according to a sieving method is preferably 20% by mass or less, more preferably 15% by mass or less, and particularly preferably 12% by mass or less. The lower limit is not particularly limited, but the content of small pieces having a mesh opening value of 2.5 mm or greater according to a sieving method is preferably 80% by mass or greater, more preferably 85% by mass or greater, and particularly preferably 88% by mass or greater.

<Small pieces of dried meat>

Small pieces of dried meat are obtained by performing a dry pre-treatment on ingredient meat as necessary, drying the treated ingredient meat, and cutting the ingredient meat into small pieces.

The ingredient meat is not particularly limited as long as the meat is suitable for a pet to eat. Examples of the ingredient meat include chicken meat, beef, pork, venison, fish, and internal organs of livestocks. From the viewpoint of easily obtaining a healthy impression, meat with a conspicuous color tone when mixed with puffed granules is preferable. For example, breast meat of chicken is preferable.

It is preferable that small pieces of dried meat are impregnated with fats and oils and saccharides as a dry pre-treatment and then dried. From the viewpoint of preserving properties, it is preferable that the moisture activity of small pieces of dried meat is decreased by impregnating the small pieces of dried meat with fats and oils and saccharides.

The hardness (breaking hardness) of the small pieces of dried meat is preferably in a range of 3.9 to 180.5 N.

Particularly from the viewpoint that the small pieces are not extremely hard and favorable palatability is likely to be obtained, the breaking hardness thereof is preferably in a range of 3.9 to 29.4 N, more preferably in a range of 5.0 to 25.0 N, and particularly preferably in a range of 10.0 to 20.0 N.

The drying step can be performed according to a heat-drying method or a freeze-drying method. From the viewpoints of preventing thermal deterioration of the taste and the color tone and easily obtaining favorable palatability and an excellent healthy impression, a freeze-drying method is preferable.

The small pieces of dried meat obtained according to the freeze-drying method are more porous and have a smaller hardness (breaking hardness) compared to the small pieces of dried meat obtained according to a heat-drying method. The small pieces of dried meat having a hardness (breaking hardness) of 3.9 to 29.4 N can be easily produced by using the freeze-drying method.

In the small pieces of dried meat, the content of small pieces having a mesh opening value of 7 mm or greater according to a sieving method is preferably 20% by mass or less, more preferably 18% by mass or less, and particularly preferably 16% by mass or less.

Since small pieces of dried meat have high palatability for pets, the effect of increasing the ingested amount of puffed granules becomes excellent by adding small pieces of dried meat to puffed granules in a case where the mesh opening value satisfies the above-described conditions.

In addition, from the viewpoint that it is easily understood that the pet food contains small pieces of dried meat based on the appearance, the content of small pieces having a mesh opening value of 2.5 mm or greater according to a sieving method is preferably 80% by mass or greater, more preferably 85% by mass or greater, and particularly preferably 88% by mass or greater with respect to the total content of the small pieces of dried meat.

<Pet food>

The pet food of the present invention contains puffed granules, small pieces of dried vegetables, and small pieces of dried meat, and the moisture content thereof is 10% by mass or less. The puffed granules, the small pieces of dried vegetables, and the small pieces of dried meat are mixed and then accommodated in a packaging container.

Favorable palatability and an excellent healthy impression can be obtained by such pet food containing small pieces of dried vegetables and small pieces of dried meat in addition to the puffed granules. Excellent preserving properties can be obtained by setting the moisture content of the entire pet food (pet food product) to 10% by mass or less. Further, the pet food can be easily fed without necessity of weighing and mixing granules and small pieces before feeding.

It is preferable that the puffed granules and the small pieces of dried vegetables are coated with the coating composition containing a palatability improver and the small pieces of dried meat are not coated with the coating composition.

By adhering the palatability improver to each surface of puffed granules and small pieces of dried vegetables, the palatability thereof can be improved. On the contrary, it is preferable that the small pieces of dried meat are not coated with the coating composition because the original flavor of the meat is obtained so that favorable palatability is likely to be obtained.

From the viewpoint of obtaining favorable palatability for pets that do not like small pieces of dried vegetables, it is particularly preferable that the puffed granules and the small pieces of dried vegetables are coated with the same coating composition.

The total content of the puffed granules is preferably in a range of 50% to 95% by mass and more preferably in a range of 70% to 90% by mass with respect to the total content of the pet food. In a case where the total content of the puffed granules is in the above-described range, pet food which is nutritionally well-balanced is easily obtained.

The total content of the small pieces of dried vegetables is preferably in a range of 1% to 20% by mass and more preferably in a range of 3% to 10% by mass with respect to the total content of the pet food. In a case where the total content of the dried vegetables is in the above-described range, an excellent healthy impression is likely to be obtained.

The total content of the small pieces of dried meat is preferably in a range of 1% to 10% by mass and more preferably in a range of 2% to 8% by mass with respect to the total content of the pet food. In a case where the total content of the small pieces of dried meat is in the above-described range, favorable palatability is likely to be obtained.

Further, in a case where the puffed granules contain staple puffed granules, meat granules, and wheat granules, for example, it is preferable that the content of staple puffed granules is in a range of 50% to 70% by mass, the content of meat granules is in a range of 20% to 40% by mass, and the content of wheat granules is in a range of 1% to 10% by mass with respect to the total content of the puffed granules.

The pet food of the present invention may contain other granules or small pieces (hereinafter, these are collectively referred to as "optional granules") which do not correspond to the puffed granules, the small pieces of dried vegetables, and small pieces of dried meat within the range not damaging the desired effects.

The total content of the optional granules is preferably 20% by mass or less, more preferably 10% by mass or less, and more preferably 5% by mass or less with respect to the total content of the pet food. Further, the pet food may not contain the optional granules.

<Method for preparing pet food>

The method for preparing pet food of the present invention includes a step of mixing puffed granules, small pieces of dried vegetables, and small pieces of dried meat such that the moisture content thereof is set to 10% by mass or less. In a case where the pet food contains the optional granules, puffed granules, small pieces of dried vegetables, and small pieces of dried meat are mixed such that the moisture content of the mixture including the optional granules is set to 10% by mass or less. The pet food product is obtained by accommodating a predetermined amount of the mixture obtained in the above-described manner in a packaging container and sealing the packaging container. A packaging container which can hold the moisture content is used as the packaging container.

It is preferable that the moisture contents of all granules and all small pieces before being mixed are respectively 10% by mass or less. In a case where the granules and the small pieces before being mixed are dried in advance such that the moisture contents thereof are respectively set to 10% by mass or less, moisture transfer between granules or small pieces with different moisture contents in the pet food before the granules and small pieces are mixed is suppressed. As the moisture transfer decreases, temporal change in texture or color tone of granules or small pieces is suppressed during the storage of pet food.

Further, in all the granules and small pieces to be mixed, the moisture content of some of these may be greater than 10% by mass and the moisture content of the rest may be 10% by mass or less. In this case, the moisture content and the formulation of the granules and small pieces are adjusted such that the moisture content of the mixture obtained by mixing all the granules and small pieces is set to 10% by mass or less.

From the viewpoint of easily decreasing moisture transfer, the granules or small pieces whose moisture content before being mixed is greater than 10% by mass has a moisture content of preferably 15% by mass or less and more preferably 13% by mass or less.

The order of mixing the puffed granules, the small pieces of dried vegetables, the small pieces of dried meat, and the optional granules is not particularly limited. All the granules and small pieces may be mixed at once or only some of these may be mixed in advance and then the rest may be mixed.

It is preferable that the pet food is produced by mixing only granules and small pieces, to which a coating treatment is applied, in advance, coating the mixture with the coating composition, and mixing granules and small pieces, to which a coating treatment is not applied, with the above-described mixture.

For example, the puffed granules and the small pieces of dried vegetables are mixed in advance and coated with the coating composition containing a palatability improver. Thereafter, the puffed granules and the small pieces of dried vegetables which have been coated with the coating composition are mixed with the small pieces of dried meat which have not been coated with the coating composition. According to this method, pet food that contains puffed granules and small pieces of dried vegetables which are coated with the same coating composition and small pieces of dried meat which are not coated with the coating composition can be efficiently produced.

Examples

Hereinafter, the present invention will be described in more detail with reference to the following examples, but the present invention is not limited to these examples.

Pet food was produced using granules or small pieces described below.

[Puffed granules]

Three kinds of puffed granules with nutrient compositions different from one another were prepared to have the formulation listed in Table 1. The content of wheat flours is the total content of wheat flour and bread crumbs in Table 1.

(Production Example 1: production of staple puffed granules)

Ingredients with a formulation a listed in Table 1 and an appropriate amount of water (added water) were added and mixed to obtain an ingredient mixture. The obtained ingredient mixture was put into an extruder, a heat treatment was performed under a temperature condition of 115°C ± 15°C for approximately 2 minutes while the ingredient mixture was kneaded so that starch components were pregelatinized, and then the mixture was allowed to be puffed simultaneously with extrusion and formation of the mixture in a granular shape at an outlet of the extruder. The obtained formed product was subjected to a heat treatment and a drying treatment at approximately 130°C, thereby obtaining uncoated puffed granules. The obtained uncoated puffed granules were coated with a coating composition by performing a coating step described below to obtain staple puffed granules. A coating solution listed in Table 2 was used as the coating composition (the same applies hereinafter).
The average long diameter and the average short diameter of the obtained staple puffed granules were both approximately 9 mm, and the moisture content thereof was 9.5% by mass.
The main component composition (in terms of dry matter) of the obtained staple puffed granules was as follows.
Crude protein content: 26.0% by mass, crude fat content: 9.0% by mass, calcium content: 1.3% by mass, and phosphorus content: 0.9% by mass

(Production examples 2 and 3: production of meat granules and wheat granules)

Uncoated puffed granules were obtained in the same manner as in Production Example 1 except that the ingredient formation was changed into a formulation b or a formulation c in Production Example 1. The obtained uncoated puffed granules were coated with a coating composition by performing a coating step described below to obtain meat granules or wheat granules.
The average long diameter and the average short diameter of the obtained meat granules were both approximately 8.5 mm, and the moisture content thereof was 9.5% by mass.
The average long diameter and the average short diameter of the obtained wheat granules were both approximately 10.5 mm, and the moisture content thereof was 8.0% by mass.

[Small pieces of dried vegetables]

Dried cabbage: A product obtained by coating small pieces of dried cabbage produced according to a hot air drying method after a treatment of preservation in sugar was performed with a coating composition by performing a coating step described below. The content of small pieces having a mesh opening value of 7 mm or greater according to a sieving method was 14% by mass and the content of small pieces having a mesh opening value of 2.5 mm or greater according to a sieving method was 98% by mass.
Dried carrots a: A product obtained by coating small pieces of dried carrots produced according to a hot air drying method after a treatment of preservation in sugar was performed with a coating composition by performing a coating step described below. The content of small pieces having a mesh opening value of 7 mm or greater according to a sieving method was 14% by mass and the content of small pieces having a mesh opening value of 2.5 mm or greater according to a sieving method was 98% by mass.
Dried carrots b: A product obtained by coating porous small pieces of dried carrots produced by impregnating cut carrots with an expanding agent and saccharides, and heating, foaming, and drying the resulting carrots with a coating composition by performing a coating step described below. The content of small pieces having a mesh opening value of 7 mm or greater according to a sieving method was 0.2% by mass and the content of small pieces having a mesh opening value of 2.5 mm or greater according to a sieving method was 89% by mass.

[Small pieces of dried meat]

Dried meat a: A freeze-dried product obtained by performing a treatment of immersing chicken meat in fats and oils and saccharides and freeze-drying the resultant. The moisture content thereof was 9.0% by mass and the hardness thereof was 14.4 N. The content of small pieces having a mesh opening value of 7 mm or greater according to a sieving method was 16% by mass and the content of small pieces having a mesh opening value of 2.5 mm or greater according to a sieving method was 95% by mass.

Dried meat b: A hot air-dried product obtained by drying chicken meat with hot air. The moisture content thereof was 12.4% by mass and the hardness thereof was 96.5 N. The content of small pieces having a mesh opening value of 7 mm or greater according to a sieving method was adjusted to 16% by mass and the content of small pieces having a mesh opening value of 2.5 mm or greater according to a sieving method was 95% by mass.

<Examples and comparative examples>

Pet food was produced to have the formulation listed in Table 3. The palatability, the healthy impression, and the digestibility of the obtained pet food were evaluated according to the following method. The results are listed in Table 3.

[Examples 1 to 3]

Three kinds of puffed granules and small pieces of dried vegetables were mixed, and the mixture was used as an object to be coated and the object was coated with a coating solution (coating step) obtained by mixing ingredients with the proportions listed in Table 2 so as to have the coating amount listed in Table 2. Next, small pieces of dried meat were mixed with the puffed granules and small pieces of dried vegetables obtained in the above-described manner, thereby obtaining pet food.

[Comparative Example 1: pet food which does not contain small pieces of dried vegetables]

Three kinds of puffed granules were mixed, and the mixture was used as an object to be coated and the object was coated with a coating solution (coating step) obtained by mixing ingredients with the proportions listed in Table 2. Next, small pieces of dried meat were mixed with the mixture of the puffed granules obtained in the above-described manner, thereby obtaining pet food.

[Comparative Example 2: pet food which does not contain small pieces of dried meat]

Three kinds of puffed granules and small pieces of dried vegetables were mixed, and the mixture was used as an object to be coated and the object was coated with a coating solution (coating step) obtained by mixing ingredients with the proportions listed in Table 2. Next, the mixture of the puffed granules and the small pieces of dried vegetables was used as pet food.

[Comparative Example 3: pet food which does not contain small pieces of dried vegetables and small pieces of dried meat]

Three kinds of puffed granules were mixed, and the mixture was used as an object to be coated and the object was coated with a coating solution (coating step) obtained by mixing ingredients with the proportions listed in Table 2. Next, the mixture of the puffed granules obtained in the above-described manner was used as pet food.

(Method of evaluating palatability)

The palatability was evaluated according to a method of comparing the ingested amounts using a combination of pet food P of Comparative Example 3 and each pet food of Examples 1 to 3 and Comparative Examples 1 and 2. The test was performed for 2 days by monitoring 20 dogs.

On the first day, a predetermined amount of pet food P and pet food Q was were fed to each dog at the same time, one from the left side and the other from the right side, and then each amount of pet food eaten by a dog was measured either after the dog has eaten all of the pet food or after 1 hour.

The ratio between the ingested amount of pet food Q and the ingested amount of pet food P (P:Q, P + Q = 100%) was acquired in percentages based on the total mass of the pet food eaten by one dog during the first day. The percentages obtained from the number of dogs that had been monitored were averaged and set as the result for the first day.

On the second day, contrary to the first day, the same amount of pet food P and pet food Q as in the first day was fed to each dog at the same time, one from the left side and the other from the right side, and then each amount of pet food eaten by a dog was measured either after the dog has eaten all of the pet food or after 1 hour. The results of the second day were obtained according to the same calculation method as that for the first day.

Finally, the results of the first and second days were averaged, and the ratio "P:Q" between the ingested amount of pet food P and the ingested amount of pet food Q as the final result was acquired. As the numerical value of P or Q is high, this indicates that the dog that was monitored pleasantly ate the pet food. In a case where the value of Q was higher than 50%, this indicates that the palatability thereof was further improved than that of the pet food P of Comparative Example 3.

The palatability of the pet food Q compared to the pet food P of Comparative Example 3 was evaluated based on the following criteria.

A: The value of the pet food Q was 60% or greater (the palatability thereof was improved).
B: The value of the pet food Q was 40% or greater and less than 60% (the palatability thereof was not changed).
C: The value of pet food Q was less than 40% (the palatability thereof was degraded).

(Method of evaluating healthy impression)

Questionnaire survey was performed on consumers (22 monitors) according to a method of answering the questions by viewing the appearances of two products of the pet food P of Comparative Example 2 and each pet food Q of Examples 1 to 3 and Comparative Examples 1 and 3. The percentage (unit: %) of people answered that the pet food Q was better than the pet food P was calculated based on the total number of answers for the question of "nutritional balance from the appearance".

The healthy impression of the pet food Q compared to that of the pet food P of Comparative Example 2 was evaluated based on the following criteria.

A: 60% or greater (healthy impression was excellent)
B: 40% or greater and less than 60% (healthy impression was the same)
C: less than 40% (healthy impression was poor)

(Method of evaluating digestibility)

The state of feces was observed by monitoring three dogs and feeding the dogs with the pet food of each example for 7 days. From the viewpoints of relatively low digestibility and ease of performing observation, dried carrots were selected as the observation target from among the granules and the small pieces constituting the pet food. The digestibility of the pet food was evaluated based on the following criteria.

A: Carrots were almost not found from the appearance of the feces.
B: Carrots remaining in the feces were found.

[Table 1]

| | | Formulation a | Formulation b | Formulation c |
|---|---|---|---|---|
| | | Staple puffed granules | Meat granules | Wheat granules |
| Ingredients of puffed granules [% by mass] (excluding added water) | Raw meat (chicken meat) | 0.0% | 26.4% | 0.0% |
| | Animal protein source | 29.3% | 19.3% | 0.0% |
| | Rice flour | 14.7% | 13.2% | 0.0% |
| | Wheat flours | 21.1% | 30.9% | 98.0% |
| | Starch | 11.6% | 7.6% | 0.0% |
| | Corn | 12.0% | 0.0% | 0.0% |
| | Beans | 8.1% | 0.0% | 0.0% |
| | Fibers | 1.0% | 1.0% | 0.0% |
| | Additives | 2.2% | 1.5% | 2.0% |
| | Total amount | 100.0% | 100.0% | 100.0% |

[Table 2]

| Total amount of object to be coated | | 91.4% |
|---|---|---|
| Formulation of coating solution [% by mass] | Animal fats and oils | 4.2% |
| | Vegetable fats and oils | 1.9% |
| | Palatability improver | 2.5% |

[Table 3]

| | | | Example 1 | Example 2 | Example 3 | Comparative Example 1 | Comparative Example 2 | Comparative Example 3 |
|---|---|---|---|---|---|---|---|---|
| Pet food | Puffed granules [parts by mass] | Staple puffed granules | 53 | 53 | 53 | 53 | 53 | 53 |
| | | Meat granules | 31 | 31 | 31 | 31 | 31 | 31 |
| | | Wheat granules | 4 | 4 | 4 | 4 | 4 | 4 |
| | Small pieces of dried vegetables [parts by mass] | Dried cabbage | 5 | 5 | 5 | - | 5 | - |
| | | Dried carrots a | 2 | - | - | - | - | - |
| | | Dried carrots b (porous) | - | 2 | 2 | - | 2 | - |
| | Small pieces of dried meat [parts by mass] | Dried meat a (freeze-dried product) | 5 | 5 | - | 5 | - | - |
| | | Dried meat b (hot air-dried product) | - | - | 5 | - | - | - |
| | Total amount [parts by mass] | | 100 | 100 | 100 | 93 | 95 | 88 |
| Evaluation | Palatability | | A | A | A | A | B | B (reference) |
| | Healthy impression | | A | A | B | c | B (reference) | c |
| | Digestibility | | B | A | A | - | A | - |

As shown in the results listed in Table 3, in the pet food of Examples 1 to 3 containing the puffed granules, the small pieces of dried vegetables, and the small pieces of dried meat, the palatability for pets was favorable and the healthy impression was also excellent. Particularly in the pet food of Example 1 and 2, the healthy impression was further improved by using the small pieces of dried meat as a freeze-dried product. Further, in the pet food of Examples 2 and 3, the digestibility was improved by using porous dried carrots b.

On the contrary, in the pet food of Comparative Example 1 which did not contain small pieces of dried vegetables, the palatability was favorable, but the healthy impression was poor. In the pet food of Comparative Example 2 which did not contain small pieces of dried meat, the palatability was degraded.

<Test Example 1>

In the present example, the effect of increasing the ingested amount of puffed granules was measured by changing the size of small pieces of dried meat according to a method of mixing small pieces of dried meat with puffed granules and the feeding a pet with the mixture.

As the small pieces of dried meat, the dried meat a; and dried meat c and d obtained by adjusting the size (grain size distribution) of the dried meat a to the values listed in Table 4 using a sieve having a mesh opening value of 7 mm were prepared.

180 g of the staple puffed granules obtained in Production Example 1 and 20 g of the dried meat c, d, or a were respectively mixed, thereby obtaining 200 g of a sample 1, 200 g of a sample 2, and 200 g of a sample 3.

One dog was fed with the sample 1 on the first day, the sample 2 on the second day, and the sample 3 on the third day for 2 minutes in one meal respectively. The leftovers after 2 minutes were divided into staple puffed granules and small pieces of dried meat, and the mass of each leftover was measured. Based on the results of these, the ingested amount (unit: g) of puffed granules per 1 g of small pieces of dried meat was acquired with respect to each sample by dividing the mass of staple puffed granules ingested for 2 minutes by the mass of small pieces of dried meat ingested similarly for 2 minutes.

The sample test was performed on four dogs and the average value obtained from four dogs was acquired.

The results are listed in Table 4. Further, Table 4 shows relative values of the ingested amounts of puffed granules per 1 g of small pieces of dried meat in the samples 2 and 3 when using the sample 1 as a reference.

[Table 4]

| | | Sample 1 | Sample 2 | Sample 3 |
|---|---|---|---|---|
| Size of small pieces of dried meat (grain size distribution) | Dried meat | c | d | a |
| | Percentage of small pieces having mesh opening value of 7 mm or greater [% by mass] | 30% | 20% | 16% |
| Ingested amount of puffed granules per 1 g of small pieces of dried meat | Average value [g] | 11.29 | 12.21 | 13.59 |
| | Relative value | 1 (reference) | 1.08 | 1.20 |

As shown in the results listed in Table 4, in a case where the content of small pieces having a mesh opening value of 7 mm or greater, which are relatively large, according to a sieving method is small in the small pieces of dried meat, the ingested amount of the puffed granules per 1 g of the small pieces of dried meat is large. In the case of small pieces of dried meat having a mesh opening value of 7 mm or greater, it is considered that dogs are likely to select and eat only the small pieces of dried meat.

**Claims**

**1.** Pet food comprising:

puffed granules;
small pieces of dried vegetables; and
small pieces of dried meat,
wherein the moisture content of the pet food is 10% by mass or less.

**2.** The pet food according to claim 1,
wherein the moisture content of each of the puffed granules, the small pieces of dried vegetables, and the small pieces of dried meat is 10% by mass or less.

**3.** The pet food according to claim 1 or 2,
wherein the hardness of the small pieces of dried meat is in a range of 3.9 to 29.4 N.

**4.** The pet food according to any one of claims 1 to 3,
wherein the small pieces of dried meat are freeze-dried.

**5.** The pet food according to any one of claims 1 to 4,
wherein the proportion of small pieces having a mesh opening value as measured according to a sieving method of 7 mm or greater in the small pieces of dried meat is 20% by mass or less.

**6.** The pet food according to any one of claims 1 to 5,
wherein the small pieces of dried meat are impregnated with fats and oils and saccharides.

**7.** The pet food according to any one of claims 1 to 6,
wherein the small pieces of dried vegetables have been subjected to a treatment of preservation in sugar.

**8.** The pet food according to any one of claims 1 to 7,
wherein the small pieces of dried vegetables are coated with a coating composition containing a palatability improver.

**9.** The pet food according to any one of claims 1 to 8,
wherein the small pieces of dried vegetables contain porous small pieces of dried vegetables.

**10.** The pet food according to any one of claims 1 to 9,
wherein the puffed granules contain two or more kinds of puffed granules with nutrient compositions different from one another, and
all puffed granules do not contain a colorant.

**11.** The pet food according to any one of claims 1 to 10,
wherein the puffed granules contain staple puffed granules satisfying the following nutrient composition:
crude protein content: 18% to 34% by mass, crude fat content: 5% to 22% by mass, calcium content: 0.6% to 2.5% by mass, and phosphorus content: 0.5% to 1.6% by mass.

**12.** A method for preparing pet food, comprising:
mixing puffed granules, small pieces of dried vegetables, and small pieces of dried meat such that the moisture content of the mixture is 10% by mass or less.

**13.** The method for preparing pet food according to claim 12,
wherein the moisture content of each of the puffed granules, the small pieces of dried vegetables, and the small pieces of dried meat before being mixed is 10% by mass or less.

**14.** The method for preparing pet food according to claim 12 or 13,
wherein the puffed granules and the small pieces of dried vegetables which are coated with a coating composition containing a palatability improver are mixed with the small pieces of dried meat which are not coated with the coating composition.

**INTERNATIONAL SEARCH REPORT**

| International application No. |
| --- |
| PCT/JP2016/062285 |

A. CLASSIFICATION OF SUBJECT MATTER
*A23K50/42(2016.01)i, A23K10/20(2016.01)i, A23K10/30(2016.01)i*

According to International Patent Classification (IPC) or to both national classification and IPC

B. FIELDS SEARCHED

Minimum documentation searched (classification system followed by classification symbols)
A23K10-00-50/90

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | US 2006/0062892 A1  (MERRICK W. Tyler), 23 March 2006 (23.03.2006), paragraphs [0007] to [0014] & WO 2006/036361 A2 | 1–14 |
| Y | JP 2008-5803 A  (Red Heart Inc.), 17 January 2008 (17.01.2008), paragraphs [0018] to [0048] (Family: none) | 1–14 |
| Y | JP 2015-126715 A  (Uni-Charm Corp.), 09 July 2015 (09.07.2015), paragraphs [0037] to [0073] & WO 2015/072156 A        & TW 001531230 A | 3–11 |

☒ Further documents are listed in the continuation of Box C.      ☐ See patent family annex.

| | |
| --- | --- |
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    17 June 2016 (17.06.16) | Date of mailing of the international search report<br>    28 June 2016 (28.06.16) |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/062285

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3094017 U  (Satoru ASANUMA),<br>30 May 2003 (30.05.2003),<br>paragraphs [0002] to [0006], [0021] to [0039];<br>fig. 1 to 2<br>(Family: none) | 4-11,14 |
| Y | JP 2008-29339 A  (Kao Corp.),<br>14 February 2008 (14.02.2008),<br>paragraphs [0020], [0031]<br>(Family: none) | 6-11 |
| Y | JP 2005-536207 A  (Mars, Inc.),<br>02 December 2005 (02.12.2005),<br>paragraphs [0009] to [0031]<br>& US 2006/0062875 A1    & WO 2004/017750 A1<br>& EP 001545239 A | 6-11,14 |
| Y | JP 2012-500025 A  (Creative Resonance, Inc.),<br>05 January 2012 (05.01.2012),<br>paragraph [0002]<br>& US 2010/0040745 A1    & US 2013/0084360 A1<br>& WO 2010/021983 A2    & EP 002348898 A<br>& CN 102939018 A | 10-11 |
| Y | JP 2008-525475 A  (Hill's Pet Nutrition, Inc.),<br>17 July 2008 (17.07.2008),<br>paragraph [0032]<br>& US 2006/0134014 A1    & WO 2006/069241 A2<br>& EP 001827104 A        & CN 101119634 A | 11 |
| A | JP 10-127233 A  (Nippon Flour Mills, Co., Ltd.),<br>19 May 1998 (19.05.1998),<br>entire text<br>(Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015153664 A
- JP 2008005803 A
- JP 2005536207 W